# EUROPÄISCHE PATENTSCHRIFT

(11) **EP 0 472 967 B1**
(45) Veröffentlichungstag und Bekanntmachung des Hinweises auf die Patenterteilung: **21.09.1994**
(21) Anmeldenummer: 91113245.4
(22) Anmeldetag: 07.08.1991
(51) Int. Cl.: B09B 3/00, E21B 43/00

(54) **Anordnung zum Austreiben leichtflüchtiger Verunreinigungen aus dem Grundwasser**
Device for removing volatile contaminants from groundwater
Dispositif pour retirer des polluants volatisables de l'eau souterraine

(30) Priorität: 29.08.1990 DE 4027304
(43) Veröffentlichungstag der Anmeldung: 04.03.1992
(73) Patentinhaber: IEG Industrie-Engineering GmbH, D-72770 Reutlingen (DE)
(72) Erfinder: Bernhardt, Bruno, W-7410 Reutlingen (DE)
(74) Vertreter: Möbus, Rudolf, Dipl.-Ing.

(56) Entgegenhaltungen:
- EP-A- 0 304 712
- EP-A- 0 328 993
- DE-A- 3 625 488
- DE-A- 3 626 145
- DE-C- 3 811 962
- GB-A- 2 159 727
- US-A- 4 593 760

## Beschreibung

Die Erfindung betrifft eine Anordnung zum Austreiben leichtflüchtiger Verunreinigungen aus dem Grundwasser und dem von ihm durchströmten Erdreich durch Unterdruckbildung in einen bis in den Bereich des verunreinigten Grundwassers getriebenen Brunnenschacht und Einbringen eines Gases, insbesondere von Luft, über einen Düsenkörper in das Grundwasser im Schacht.

Anordnungen der vorstehend genannten Art sind bereits vorgeschlagen worden (DE-A-36 25 488 und EP-A-0 328 993). Bei diesen wird Luft oder Gas durch den im Schacht erzeugten Unterdruck über eine Zuleitung in einen Luftaufnahmeraum unterhalb des Grundwasserspiegels im Schacht geleitet. Der Luftaufnahmeraum ist durch eine Düsenplatte vom Wasserraum abgetrennt, wobei die Düsenplatte an einem Schwimmer in einstellbarem Abstand unterhalb der Wasseroberfläche hängt. Die Anordnung hat sich in der Praxis außerordentlich bewährt. Bei sehr engen Schachtdurchmessern ergeben sich jedoch Schwierigkeiten beim Einbringen des Schwimmers und der Düsenplatte.

Der vorliegenden Erfindung liegt die Aufgabe zugrunde, eine Anordnung zum Austreiben leichtflüchtiger Verunreinigungen aus den Grundwasser für Brunnenschächte mit relativ kleinen Durchmessern zu schaffen.

Die gestellte Aufgabe wird mit einer Anordnung der eingangs genannten Art erfindungsgemäß dadurch gelöst, daß der Düsenkörper durch einen Siebwandungsabschnitt des Brunnenschachtes gebildet ist, der oberhalb des Grundwasserspiegels des Erdreichs so angeordnet ist, daß er bei der durch den im Schacht erzeugten Unterdruck erfolgenden Anhöhung des Grundwasserspiegels im Schacht mindestens teilweise unterhalb des durch die Wirkung des Unterdrucks angehöhten Grundwasserspiegels im Schacht zu liegen kommt, und daß vor dem Siebwandungsabschnitt ein Filtereinsatz angeordnet ist.

Der Unterdruck bewirkt ein Ansaugen von Luft oder anderen Gasen aus dem umliegenden Erdreich durch den Düsenkörper in den Schacht. Luft, die oberhalb des Grundwasserspiegels in den Schacht einströmt, rauht die Wasseroberfläche im Schacht auf und löst einzelne Tropfen ab. Dadurch kann Luft auch unter den Grundwasserspiegel gelangen, wobei die Luft durch die Öffnungen der Siebwandung zu feinen Bläschen zerteilt wird, die auf ihrem Weg zur Wasseroberfläche im Wasser gelöste leichtflüchtige Verunreinigungen, wie Chlorkohlenwasserstoffe, an sich binden und aus dem Wasser entfernen können. Durch den vorgesetzten Filtereinsatz wird das gewünschte Eindringen der Luft in den Wasserbereich begünstigt, weil im Filterbereich eine geschlossene Wasseroberfläche beseitigt wird. Der Filtereinsatz und die angrenzenden Dichtungsmanschetten können gemeinsam verstellbar auf der Siebwandung eines Brunnenrohres angeordnet sein.

Das im Brunnenschacht befindliche Wasser wird im oberen Bereich durch die Unterdruckbildung und den Durchgang der Luft abgekühlt und trägt dadurch zu einer Umwälzbewegung des Wassers im Brunnenschacht bei, so daß immer neue Wassermengen in den Reinigungsbereich unterhalb der Wasseroberfläche im Schacht gelangen.

Zur Regulierung des Nachflusses von Luft und/oder Wasser können Filtereinsätze auch vor anderen Siebwandungsabschnitten des Schachtes angeordnet sein. In besonders dichten Bodenschichten kann die Zufuhr von Luft dadurch erleichtert werden, daß in der Umgebung des Brunnenschachtes Zusatzbohrungen in das Erdreich eingebracht werden. In diese Zusatzbohrungen kann Luft oder können andere Reinigungsgase auch unter Druck eingeleitet werden, um so den Wirkungsgrad der Anordnung zu erhöhen. Zweckmäßigerweise kann auch der Ventilator in seiner Leistung regulierbar sein, so daß der erzeugte Unterdruck den unterschiedlichen Randbedingungen, wie Brunnenschachtdurchmesser, Bodendichte sowie Grad und Art der Verunreinigung, angepaßt werden kann.

Nachfolgend werden zwei Ausführungsbeispiele einer erfindungsgemäßen Anordnung anhand der Zeichnung näher erläutert.

Im einzelnen zeigen:
- Fig. 1: einen schematisierten Längsschnitt durch ein erstes Ausführungsbeispiel der Anordnung;
- Fig. 2: einen schematisierten Längsschnitt durch ein zweites Ausführungsbeispiel der Anordnung.

Gemäß beiden Figuren ist in das Erdreich 10 ein Brunnenschacht 11 bis in einen verunreinigten Grundwasserbereich 12 getrieben. Der Grundwasserpegel ist durch eine Linie 13 angedeutet. In den Brunnenschacht 11 ist ein Brunnenrohr 14 eingesetzt. Das Brunnenrohr 14 weist eine Siebwandung auf, die mittels eines Außenmantels 22 in wasserdurchlässige und wasserundurchlässige Wandungsabschnitte 14a, 14b unterteilt wird. An der Erdoberfläche ist der Brunnenschacht 11 mit einem Deckel 15 luftdicht verschlossen. Oberhalb des Deckels 15 ist ein Ventilator 16 zur Erzeugung von Unterdruck im Brunnenschacht 11 angeordnet. Die Leistung des Ventilators 16 ist über eine nicht dargestellte Steuereinheit regulierbar. Der im Schacht 11 erzeugte Unterdruck bewirkt eine Anhöhung des Grundwasserpegels 13 im und in der Umgebung des Brunnenschachtes 11, was durch die gestrichelte Linie 13a angedeutet ist. Im Bereich des angehöhten Grundwasserspiegels 13a weist das Brunnenrohr 14 einen Siebwandungsbereich 14a auf, der teilweise unterhalb und teilweise oberhalb des Grundwasserspiegels 13a im Schacht liegt. Ober- und unterhalb des Siebwandungsbereiches 14a sind im Mantel 22 Dichtungsmanschetten 17, 17.1 angeordnet, um ein gezieltes Einleiten von Luft oder anderen Gasen aus dem Erdreich 10 durch den Siebwandungsbereich 14a in den Brunnenschacht 11 zu ermöglichen. Der durch den Ventilator 16 erzeugte Unterdruck wird so stark gewählt, daß er nicht mehr durch Nachfluß von Grundwasser in den Schacht 11 kompensiert werden kann. Dadurch erhält die Luft, die oberhalb des Grundwasserspiegels 13a durch den Siebwandungsbereich 14a in den Schacht eingesogen wird, eine hohe Strömungsgeschwindigkeit und kann die Wasseroberfläche im Schacht aufrauhen. Die dabei entstehende Schaumbildung und das Abreißen von Tröpfchen von der Wasseroberfläche erleichtert das Einströmen von Luft auch unterhalb des Grundwasserspiegels 13a im Brunnenschacht 11. Die Luft oder auch andere Reinigungsgase werden beim Durchgang durch den Siebwandungsabschnitt 14a an dessen Düsenöffnungen zu feinen Bläschen zerteilt. Diese Bläschen steigen durch den Unterdruck im Schacht 11 durch das Wasser auf, wobei sie in diesem gelöste leichtflüchtige Verunreinigungen an sich binden und mit fortreißen können. Oberhalb des Grundwasserspiegels 13a wird die Luft dann zusammen mit den Verunreinigungen durch den Ventilator 16 aus dem Brunnenschacht 11 hinausbefördert. Dem Ventilator 16 ist eine Filtereinrichtung 18 nachgeordnet, in der die Verunreinigungen zurückgehalten werden, bevor die gereinigte Luft oder das Gas wieder ins Freie abgegeben wird.

Das Einbringen der Luft in das Grundwasser wird dadurch erleichtert, daß vor dem Siebwandungsbereich 14a im Mantel 22 ein Filtereinsatz 23 angebracht ist, in welchem die geschlossene Grundwasseroberfläche zwangsläufig aufgebrochen wird.

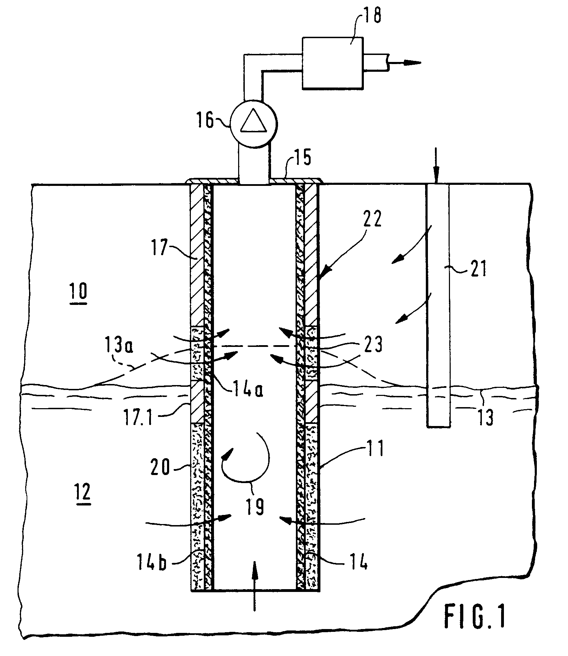

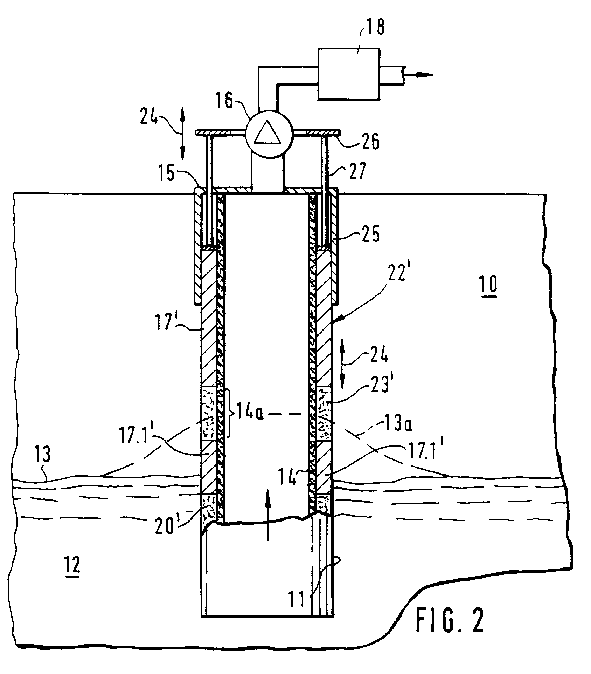

Bei dem Ausführungsbeispiel nach Fig. 1 sind das Brunnenrohr 14 und der Mantel 22 beide fest mit dem Deckel 15 verbunden. Bei dem Ausführungsbeispiel nach Fig. 2 ist dagegen der Mantel 22' mit seinen Dichtungsmanschetten 17', 17.1' und seinen Filterbereichen 23', 20' in Richtung der Doppelpfeile 24 längsverschiebbar auf dem Brunnenrohr 14 angeordnet und dadurch der wasserdurchlässige Wandungsbereich 14a dem Wasserspiegel 13 nachverstellbar. Dabei ist der Mantel 22' in einem am Deckel 15 befestigten Außenzylinder 25 geführt und an einem nur schematisch angedeuteten Verstellring 26 einstellbar, der über Stangen 27 mit dem Mantel 22' verbunden ist.

Durch den herrschenden Unterdruck im Brunnenschacht 11 und den Durchgang von Luft- bzw. Gasblasen durch den oberen Bereich des Grundwassers im Brunnenschacht 11 kühlt das Wasser in diesem Bereich aus und trägt dadurch zu einer Umwälzung des Grundwassers im Brunnenschacht 11 bei, was durch den Pfeil 19 in Fig. 1 verdeutlicht ist. Die Unwälzbewegung fördert auch neues Grundwasser sowohl durch den nicht verschlossenen Schachtboden als auch durch Siebwandungsbereiche 14b des Brunnenrohres 14 im unteren Schachtbereich ins Schachtinnere. Dem unteren Siebwandungsbereich 14b des Brunnenrohres 14 sind Filtereinsätze 20 vorgeschaltet, die die Nachflußmenge des Grundwassers in den Brunnenschacht 11 regulieren und ein Eindringen von Erdreich verhindern.

Das Nachströmen von Luft oder anderen Gasen kann durch Anbringen von Zusatzbohrungen 21 (Fig. 1) in der Umgebung des Brunnenschachtes 11 erleichtert werden. Mit Hilfe dieser Bohrungen 21 ist es auch möglich, Luft oder andere Reinigungsgase unter Druck ins Erdreich 10 einzubringen und dadurch den Wirkungsgrad der gesamten Anordnung zu erhöhen. Die Zusatzbohrungen können zweckmäßigerweise bis unter den Grundwasserspiegel im Erdreich reichen, um Schwankungen des Grundwasserspiegels ausgleichen und die unmittelbar über dem Wasserspiegel angeordnete Kapillarschicht im Erdreich durchlüften zu können.

## Patentansprüche

1. Anordnung zum Austreiben leichtflüchtiger Verunreinigungen aus dem Grundwasser und dem von ihm durchströmten Erdreich durch Unterdruckbildung in einem bis in den Bereich des verunreinigten Grundwassers getriebenen Brunnenschacht und Einbringen eines Gases, insbesondere von Luft, über einen Düsenkörper in das Grundwasser im Schacht, dadurch gekennzeichnet, daß der Düsenkörper durch einen Siebwandungsabschnitt (14a) des Brunnenschachtes (11) gebildet ist, der oberhalb des Grundwasserspiegels (13) des Erdreiches so angeordnet ist, daß er bei der durch den im Brunnenschacht gebildeten Unterdruck erfolgenden Anhebung des Grundwasserspiegels (13a) im Brunnenschacht mindestens teilweise unterhalb des Grundwasserspiegels (13a) zu liegen kommt, und daß vor dem Siebwandungsabschnitt (14a) ein Filtereinsatz (23) angeordnet ist.

2. Anordnung nach Anspruch 1, dadurch gekennzeichnet, daß sich der Düsenkörper über den gesamten Schachtumfang erstreckt.

3. Anordnung nach einen der Ansprüche 1 bis 2, dadurch gekennzeichnet, daß auch vor anderen Siebwandungsabschnitten (14b) des Schachtes (11) Filtereinsätze (20) zur Regulierung des Nachflusses von Wasser und/oder Luft angeordnet sind.

4. Anordnung nach einem der Ansprüche 1 bis 3, dadurch gekennzeichnet, daß die Schachtwandung (14) durchgehend als Siebwandung ausgebildet und von einem aus Dichtungsmanschetten (17', 17.1') und Filtereinsätzen (20, 23) zusammengesetzten Mantel (22) umgeben ist, der in seiner Längsrichtung verstellbar angeordnet ist.

5. Anordnung nach einem der Ansprüche 1 bis 4, dadurch gekennzeichnet, daß in der Umgebung des Brunnenschachtes (11) Zusatzbohrungen (21) angeordnet sind.

6. Anordnung nach Anspruch 5, dadurch gekennzeichnet, daß in die Zusatzbohrungen (21) Gase oder Luft unter Druck einleitbar sind.

7. Anordnung nach einem der Ansprüche 1 bis 6, dadurch gekennzeichnet, daß der Ventilator (16) zur Erzeugung des Unterdruckes im Schacht (11) in seiner Leistung regulierbar ist.

## Claims

1. Arrangement for the expulsion of volatile impurities from groundwater and the soil it flows through by generating a negative pressure in a wellshaft which is driven into the area of polluted groundwater and delivering a gas, in particular air, via a nozzle element into the groundwater in the shaft, **characterised in that** the nozzle element is formed by a sieve-wall section (14a) of the wellshaft (11) which is arranged above groundwater level (13) of the soil in such a manner that, when the groundwater level (13a) rises in the wellshaft due to a negative pressure generated in the wellshaft, it is at least partially below groundwater level (13), and that a filtering insert (23) is arranged in front of the sieve-wall section (14a).

2. Arrangement according to claim 1, **characterised in that** the nozzle element extends over the entire shaft periphery.

3. Arrangement according to one of claims 1 to 2, **characterised in that** filtering inserts (20) for regulating a subsequent flow of water and/or air are also arranged in front of other sieve-wall sections (14b) of the shaft (11).

4. Arrangement according to one of claims 1 to 3, **characterised in that** the shaft wall (14) is arranged as a continuous sieve wall and surrounded by a casing (22) which is composed of sealing collars (17', 17.1') and filtering inserts (20, 23) and which is arranged to be longitudinally adjustable.

5. Arrangement according to one of claims 1 to 4, **characterised in that** supplementary bores (21) are provided in the surroundings of the wellshaft (11).

6. Arrangement according to claim 5, **characterised in that** gases or air are fed under pressure into the supplementary bores (21).

7. Arrangement according to one of claims 1 to 6, **characterised in that** the output of the ventilator (16) for generating a negative pressure in the shaft (11) is adjustable.

## Revendications

1. Dispositif pour chasser des polluants volatils de l'eau souterraine et de la terre traversée par celle-ci par génération d'une dépression dans un puits entraîné jusque dans la zone de l'eau souterraine polluée et apport d'un gaz, en particulier d'air, par l'intermédiaire d'un corps à buses dans l'eau souterraine dans le puits, caractérisé en ce que le corps à buses est formé par une section de paroi perforée (14a) du puits (11) qui est disposée au-dessus du niveau de l'eau souterraine (13) de la terre de telle sorte que lors de l'élévation du niveau de l'eau souterraine (13a) dans le puits due à la dépression formée dans le puits, il vient reposer au moins partiellement au-dessous du niveau de l'eau souterraine (13a) et en ce qu'une cartouche filtrante (23) est disposés en amont de la section de paroi perforée (14a).

2. Dispositif selon la revendication 1, caractérisé en ce que le corps à buses s'étend sur toute la circonférence du puits.

3. Dispositif selon l'une des revendications 1 à 2, caractérisé en ce que des cartouches filtrantes (20) sont disposées aussi en amont d'autres sections de paroi perforée (14b) du puits (11) pour la régulation de l'écoulement ultérieur d'eau et/ou d'air.

4. Dispositif selon l'une des revendications 1 à 3, caractérisé en ce que la paroi du puits (14) est formée en continu comme paroi perforée et entourée d'une enveloppe (22) constituée de manchon d'étanchéité (17', 17.1') et de cartouches filtrantes (20, 23), qui est disposée réglable dans sa direction longitudinale.

5. Dispositif selon l'une des revendications 1 à 4, caractérisé en ce que des perçages supplémentaires (21) sont disposés au voisinage du puits (11).

6. Dispositif selon la revendication 5, caractérisé en ce que des gaz ou de l'air peuvent être introduits sous pression dans les perçages supplémentaires (21).

7. Dispositif selon l'une des revendications 1 à 6, caractérisé en ce que le ventilateur (16) pour génération de la dépression dans le puits (11) est réglable dans sa puissance.
